# EUROPÄISCHE PATENTSCHRIFT

(11) **EP 1 233 693 B1**
(45) Veröffentlichungstag und Bekanntmachung des Hinweises auf die Patenterteilung: **13.08.2003**
(21) Anmeldenummer: 99949275.4
(22) Anmeldetag: 14.10.1999
(51) Int. Cl.: A47J 37/07

(54) **KOMBINIERTER TRAGBARER GASHERD**
COMBINED PORTABLE GAS RANGE
RECHAUD A GAZ PORTABLE POLYVALENT

(30) Priorität: 19.04.1999 HU 9901230
(43) Veröffentlichungstag der Anmeldung: 28.08.2002
(73) Patentinhaber: Fazakas, Miklos, 1118 Budapest (HU); Pal, Tibor, 1124 Budapest (HU)
(72) Erfinder: Fazakas, Miklos, 1118 Budapest (HU); Pal, Tibor, 1124 Budapest (HU)
(74) Vertreter: Goddar, Heinz J., Dr.
(86) Internationale Anmeldenummer: HU9900069
(87) Internationale Veröffentlichungsnummer: WO00062654

(56) Entgegenhaltungen:
- EP-A- 0 003 127
- US-A- 4 524 751
- US-A- 5 163 359
- US-A- 5 313 928

## Beschreibung

Gegenstand der Erfindung ist ein kombinierter tragbarer Gasherd, vor allem zum Braten, Heizen, Kochen und Backen im Feldbetrieb, welcher ein Gehäuse, einen Grillrost und eine Brennereinheit enthält, gemäß dem Oberbegriff von Anspruch 1.

Im Zeltlager, im Garten, während des Campings werden oft tragbare Gasherde gebraucht. Die Gasherde werden zum Braten von Fleischwaren, bzw. zum Backen anderer Lebensmittel verwendet. Die Gasbrenner sind unten angeordnet und erhitzen meistens einen Stein. Über dem glühenden Steinen ist ein Grillrost angeordnet, auf welchen das Essen gelegt wird. Nachteil dieser Lösung ist, daß das Essen auch von den Verbrennungsprodukten erwärmt wird. Zwischen den Steinen können die Verbrennungsprodukte nicht gleichmäßig verteilt durchströmen, was ein ungleichmäßiges Backen zur Folge hat. Einen Nachteil bedeutet auch der Umstand, daß die Verbrennungsprodukte den Grillrost auch erhitzen und daß dadurch das Fleisch anbrennt, das Reinigen des Grillrosts auch erschwert wird. Diese Geräte sind zum Heizen nicht geeignet.

Die Patentschriften HU 188.294 und DE 1.218.687 beschreiben tragbare Gasöfen, die aber nur zum Heizen geeignet sind, zum Backen oder Braten nicht. DE-OS 3.701.907 und E P 0.425.474 m achen tragbare G eräte für d ie Z ubereitung v on S peisen b ekannt. Die Geräte sind aber zum Heizen und Grillen ungeeignet. Aus dem DE-OS 3.633.784 werden wir mit einem rollbaren, zum Grillen geeigneten Garten-Gasherd bekannt. Sein Nachteil ist, daß er wegen der großen Abmessungen für den Gebrauch im Zeltlager nicht geeignet ist. Ungünstig ist auch, daß das Essen nur von oben her gewärmt werden kann und deswegen das Gerät als Fritteuse nicht gebraucht kann, und das Essen während des Bratens nicht zugedeckt werden kann.

Aus der US-A-5,313,928 ist ein gattungsgemäßer kombinierter tragbarer Gasherd bekannt, der zwei untere Brenner und einen oberen Brenner mit Flammenverteiler enthält. Bei diesem Gasherd sind zwei unterschiedliche herkömmliche Konstruktionen in einem gemeinsamen Gehäuse angeordnet.

Ziel der Erfindung ist die Beseitigung der Nachteile der bisher bekannten Lösungen und die Entwicklung eines kleinen und doch leistungsfähigen, leicht tragbaren Kombinierten Gasherds der bei verschiedenen Kipplagen des Backofens mit optimaler Leistung verwendet werden kann.

Die Grundlage der erfindungsmäßigen Idee ist die Erkenntnis, daß wenn man die obere Brennereinheit aufschlägt, so kann sie bei einem Winkel von 90° zum Heizen, bei 180° als untere Backeinheit dienen, wodurch eine günstigere Lösung als vorher erzielt wird. Zur erfindungsmäßigen Idee gehört auch, daß die Brennereinheit in einem Gehäuse angeordnet wird, welches mit einem Strahlschirm versehen, welcher beim oberen Backen zur Abdeckung der Speise, beim Heizen als Wärmestrahler und beim unteren Backen zur Aufnahme einer Platte dienen kann.

Die Erfindung löst die gestellte Aufgabe mit den im Kennzeichen von Anspruch 1 angeführten Merkmalen. Besondere Ausführungsformen der Erfindung ergeben sich aus den Unteransprüchen.

Der erfindungsmäßige kombinierte tragbare Gasherd besitzt mehrere Vorteile. Seine kleinen Abmessungen machen ihn für den Gebrauch im Zeltlager geeignet.Er ermöglicht schnelles und qualitätiges Braten, bzw. Backen, weil seine Leistung die übliche Leistung der bekannten Camping-Gasherde (0,8 kW) mehrfach übersteigt (3,5-4,0 kW). In seiner oberen Lage ist der Herd zum Grillen geeignet, wobei das Fleisch nicht an den Grillrost anbrennt. Die Reinigung ist leicht. Es ist auch günstig, daß wenn man das obere Backrohr-Gehäuse senkrecht einstellt, so erhält man einen Wärmestrahl-Infraofen hoher Leistung. Wird das obere Backrohr ganz umgekippt, so gerät es nach unten und funktioniert wie ein unteres Backrohr. Wird auf die Platte Öl gegossen, so kann man in Öl braten. In dieser Lage kann das untere Gehäuse als Deckel über das Backrohr geschwenkt werden. Ist ein entsprechendes Gefäß vorhanden, so kann der Herd auch zum Kochen gebraucht werden.

Im weiteren wird die Erfindung anhand von Ausführungsbeispielen aufgrund der Zeichnung näher beschrieben. Auf den beigelegten Zeichnungen stellt:
Figur 1 die Skizze des für Grillbetrieb geeigneten Gasherds,
Figur 2 die Skizze des für Backbtrieb geeigneten offenen Gasherds,
Figur 3 die Skizze des für Heizbetrieb geeigneten Gasherds dar.

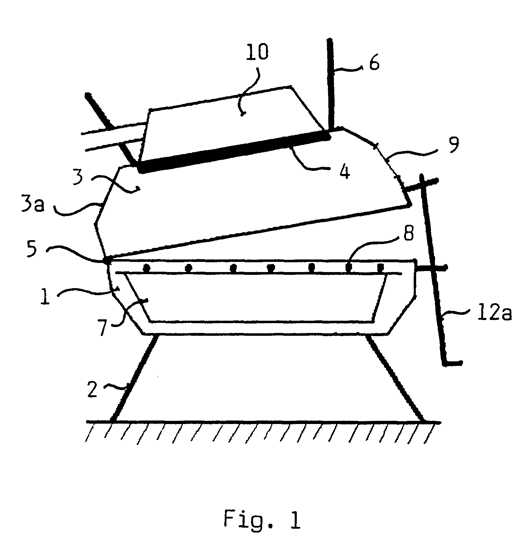

Auf Figur 1 sieht man, daß das Gehäuse 1 auf den unteren Füßen 2 steht und das Backrohr 3 oben angeordnet ist. Das Backrohr 3 und das Gehäuse 1 sind miteinander mittels des Zapfens 5 verbunden, welcher ihr Schwenken ermöglicht. Der gewünschte Neigungswinkel kann durch Änderung des Reibungswiderstands des Zapfens 5 und/oder mittels des Halteteils 12a eingestellt werden. Das Gehäuse 1 enthält die Fettsammelplatte 7 und den Grillrost 8. Die Brennereinheit 10 enthält den Infrabrenner 4. Am Backrohr 3 sind die einschwenkbaren oberen Füße 6 und das Schauloch 9 angegeben. Die Seite des Backrohrs 3 ist vorteilhaft als Strahlschirm 3a ausgebildet und steigert dadurch die Wirkung des Infrabrenners 4. Beim Betrieb wird das Bratgut auf den Grillrost 8 gelegt und von oben gegrillt. Wird das Backrohr 3 ganz zugeschlagen, so kann man durch das Schauloch 9 das Grillen beobachten

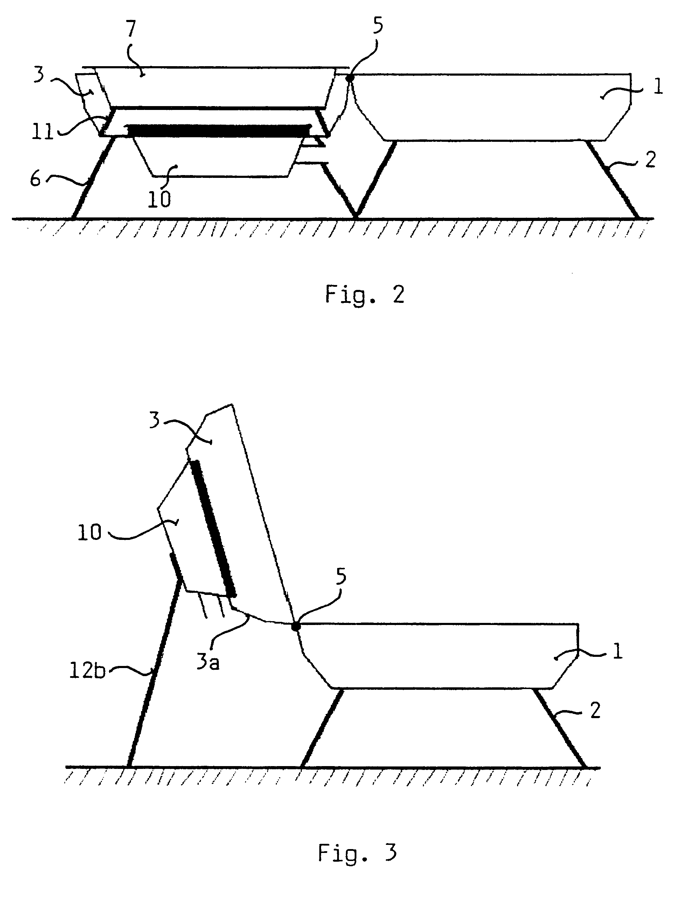

Auf Figur 2 ist das Gasherd in Bratlage dargestellt. Das Gehäuse 1 ruht auf den Füßen 2, das Backrohr 3 ist um den Zapfen 5 um 180° ausgeschwenkt und steht auf den oberen Füßen 6. In dieser Lage des Herds befindet sich die Brennereinheit 10 unten. In dem Ausführungsbeispiel ist die Platte 7 in das Backrohr 3 verlegt und funktioniert als Backblech. Die Positionierung ermöglicht der zum Abstützen dienende Profilteil 11. Während des Betriebs kann man auf die Platte 7 Öl greßen, welches von unten erhitzt die Speise zubereitet. Die Platte 7 ist natürlich auch zum Kochen geeignet.

Auf Figur 3 ist der Gasherd in der Heizlage dargestellt. Das Gehäuse 1 steht auf seinen unteren Füßen 2, während das mit dem Strahlschirm 3a versehene Backrohr 3 in einer schrägen, z.B. etwa 90° Lage ist. Das Backrohr 3 und/oder die Brennereinheit 10 ist mittels des Halteteils 12b abgestützt Beim Gebrauch wird die Brennerienheit 10 angezündet und mitsamt dem Backrohr 3 um den Zapfen 5 in eine, etwa der Heizlage entsprechende Stellung eingestellt. Die Leistung der Brennereinheit 10 kann auf bekannte Weise geregelt werden.

Der erfindungsmäßige kombinierte tragbare Gasherd kann vor allem als Feldherd zum Braten, Backen und Heizen gebraucht werden.

## Patentansprüche

1. Kombinierter tragbarer Gasherd, vor allem zum Braten und Heizen im Feldbetrieb, welcher ein Gehäuse (1), einen Grillrost (8), eine Brennereinheit (10), ein Backrohr (3) und eine wahlweise in das Gehäuse (1) unterhalb dem Grillrost (8) oder in das Backrohr (3) einlegbare Fettsammel-Platte (7) umfasst, wobei das Backrohr (3) durch ein sein Schwenken ermöglichendes Mittel, vorzugsweise einen Zapfen (5), an dem Gehäuse (1) befestigt ist, und wobei die Brennereinheit (10) sich an das Backrohr (3) anschließt, **dadurch gekennzeichnet, daß** die Brennereinheit (10) einen mindestens 60 % der Wärmeenergie durch Wärmestrahlung übergebenden Infrabrenner (4) enthält, und das Backrohr (3) einen zur Erhöhung der Wirksamkeit des Infrabrenners (4) geeigneten Strahlschirm (3a) enthält.

2. Gasherd nach Anspruch 1, **dadurch gekennzeichnet, daß** das Backrohr (3) mit den zum Einstellen des Neigungswinkels des Backrohrs (3) geeigneten Halteteil (12a, 12b) ausgerüstet ist.

3. Gasherd nach Anspruch 1 oder 2 **dadurch gekennzeichnet, daß** die Wärmeleistung des Infrabrenners (4) mindestens 3 kW beträgt und die nützliche Wärmeleistung unabhängig von dem Neigungswinkel des Infrabrenners (4) ist.

4. Gasherd nach einem der Ansprüche 1-3, **dadurch gekennzeichnet, daß** der Wechsel des Neigungswinkels des Backrohrs (3) die Betriebsart Braten, Grillen und Heizen determiniert.

## Claims

1. A combined portable gas cooker, particularly for frying and heating in field operation, comprising a housing (1), a grill (8), a burner unit (10), a cooker tube (3) and a fat collecting tray (7) which can be optionally inserted in the housing (1) beneath the grill (8) or in the cooker tube (3), the latter being fixed to the housing (1) by a means, preferably a pin (5), which allows it to pivot, and the burner unit (10) adjoining the cooker tube (3), **characterised in that** the burner unit (10) contains an infrared burner (4) which transmits at least 60% of the thermal energy by radiation and the cooker tube (3) contains a radiation screen (3a) adapted to increase the efficiency of the infrared burner.

2. A gas cooker according to claim 1, **characterised in that** the cooker tube (3) is equipped with a retaining means (12a, 12b) adapted to adjust the angle of inclination of the cooker tube (3).

3. A gas cooker according to claim 1 or 2, **characterised in that** the thermal capacity of the infrared burner (4) is at least 3 kW and the useful thermal capacity is independent of the angle of inclination of the infrared burner (4).

4. A gas cooker according to any one of claims 1 to 3, **characterised in that** the change of the angle of inclination of the cooker tube (3) determines the type of operation: frying, grilling and heating.

## Revendications

1. Réchaud à gaz portable polyvalent, avant tout pour la cuisson et le chauffage sur le terrain, qui comprend un boîtier (1), un gril (8), une unité à brûleur (10), un four (3) et une plaque collectrice de graisse (7) qui peut être introduite au choix dans le boîtier (1) en dessous du gril (8) ou dans le four (3), moyennant quoi le four (3) est fixé sur le boîtier (1) par un moyen permettant son basculement, de préférence un tourillon (5), et moyennant quoi l'unité à brûleurs (10) se raccorde au four (3), **caractérisé en ce que** l'unité à brûleur (10) comprend un brûleur à infrarouges (4) qui débite au moins 60 % de l'énergie calorifique par rayonnement thermique, et **en ce que** le four (3) comporte un écran d'acier (3a) pour l'augmentation de l'efficacité du brûleur à infrarouges (4).

2. Réchaud à gaz selon la revendication 1, **caractérisé en ce que** le four (3) est doté des pièces de maintien (12a, 12b) appropriées pour le réglage de l'angle d'inclinaison du four (3).

3. Réchaud à gaz selon l'une quelconque des revendications 1 ou 2, **caractérisé en ce que** la puissance de chauffage du brûleur à infrarouges (4) est d'au moins 3 kW et que la puissance de chauffage utile est indépendante de l'angle d'inclinaison du brûleur à infrarouges (4).

4. Réchaud à gaz selon l'une quelconque des revendications 1 à 3, **caractérisé en ce que** le changement de l'angle d'inclinaison du four (3) détermine le mode de service cuisson, grillade et chauffage.
